# EUROPÄISCHE PATENTSCHRIFT

(11) **EP 1 533 592 B1**
(45) Veröffentlichungstag und Bekanntmachung des Hinweises auf die Patenterteilung: **22.08.2007**
(21) Anmeldenummer: 04105269.7
(22) Anmeldetag: 25.10.2004
(51) Int. Cl.: G01C 21/34, G08G 1/09

(54) **Verfahren zur Auswahl und Aufbereitung von Verkehrsinformationen**
Method for selecting and processing traffic information
Procédé pour sélectionner et traiter de l'information de circulation

(30) Priorität: 20.11.2003 DE 10354218
(43) Veröffentlichungstag der Anmeldung: 25.05.2005
(73) Patentinhaber: SIEMENS AKTIENGESELLSCHAFT, 80333 München (DE)
(72) Erfinder: Zehner, Steffen, 93049, Regensburg (DE); Grohs, Frank, 93170, Bernhardswald (DE)

(56) Entgegenhaltungen:
- DE-A1- 19 535 576
- DE-A1- 19 956 108

## Beschreibung

Die Erfindung betrifft ein Verfahren zur Auswahl und Aufbereitung von Verkehrsinformationen für einen Fahrer eines Kraftfahrzeuges.

Dem Fahrer eines Kraftfahrzeuges werden in vielfältiger Weise Informationen zur Verfügung gestellt. Hierzu gehören insbesondere auch Verkehrsinformationen, die den Fahrer über Störungen im Verkehrsablauf unterrichten. Weit verbreitet ist die Übermittlung entsprechender Verkehrsmeldungen im Hörfunk. Dies kann in regelmäßigen Abständen, zum Beispiel halbstündlich erfolgen. Darüber hinaus können die Verkehrsinformationen als Datentelegramm übermittelt werden und stehen somit jederzeit im Fahrzeug zur Verfügung. Insbesondere können die so übermittelten Verkehrsinformationen auch im Fahrzeug weiterverarbeitet werden. Darüber hinaus ist es auch bekannt, Verkehrsinformationen über ein Mobilfunknetz an einen Mobilfunknutzer zu übertragen.

Empfangene Verkehrsinformationen können insbesondere auch bei der Routenplanung in Navigationssystemen verwendet werden. Hierbei können einerseits die aktuell vorliegenden Verkehrsinformationen vor Antritt der Fahrt bei der Routenplanung berücksichtigt werden. Andererseits können auch nach erfolgter Routenplanung neu hinzugekommene Verkehrsinformationen berücksichtigt werden, soweit sie die geplante Fahrtroute betreffen. Aus der DE 199 56 108 A1 ist hierzu ein Verfahren zur dynamischen Zielführung eines Kraftfahrzeuges unter Berücksichtigung von während der Fahrt empfangenen Verkehrsinformationen bekannt. Danach wird zunächst eine Route berechnet, und es werden Zielführungsinformationen zu der berechneten Route ausgegeben. Während der Fahrt werden Verkehrsinformationen empfangen und die für die berechnete Route relevanten Verkehrsinformationen ausgefiltert. Werden für die berechnete Route während der Fahrt Verkehrsinformationen zu Verkehrsbehinderungen empfangen, so wird eine weitere Routenberechnung gestartet, wobei Umgehungsrouten für mehrere Abbiegepunkte berechnet werden, an denen ein Verlassen der ursprünglichen Route möglich ist. Die Abbiegepunkte liegen dabei zwischen der aktuellen Position des Fahrzeuges und dem gemeldeten Anfang der Verkehrsbehinderung. Der Fahrer kann eine der berechneten Umgehungsrouten auswählen und erhält anschließend Zielführungsinformationen zu dieser neuen Route.

Dieses Verfahren ist nur dann anwendbar, wenn ein Zielort eingegeben wurde und eine Route zu diesem Zielort berechnet wurde. Gerade jedoch bei häufig wiederkehrenden Fahrtstrecken, wie beispielsweise vom Wohnort zum Arbeitsplatz, benötigt der Fahrer jedoch keine Zielführungsinformationen und wird daher zumeist auf die Eingabe eines Fahrtzieles und auf die Ausgabe der Zielführungsinformationen verzichten. In diesen Fällen kann das bekannte Navigationssystem auch die Ausfilterung von Verkehrsinformationen nicht vornehmen und den Fahrer beim Auftreten von Verkehrsbehinderungen auf seiner Fahrtstrecke nicht unterstützen, indem es beispielsweise eine Umgehungsroute vorschlägt.

Aus der DE 101 08 994 A1 ist ein Verfahren zum Selektieren von Verkehrsinformationen bekannt. Hierbei werden die von der Informationszentrale gesendeten Informationen zusätzlich mit Daten über die die Informationen betreffenden Streckenabschnitte verknüpft. Im Endgerät in einem Fahrzeug wird eine Filterung der empfangenen Informationen anhand der momentanen Fahrzeugposition durchgeführt, und es werden nur die Informationen ausgegeben, die die momentane Position des Fahrzeuges betreffen. Hierdurch wird zwar eine Filterung der Verkehrsinformationen erreicht, so dass es für den Fahrer einfacher ist, die für ihn eventuell relevanten Verkehrsinformationen herauszufiltern. Eine weitere Unterstützung des Fahrers erfolgt hierbei jedoch nicht.

Aus der DE 195 35 576 A1 ist ein Verfahren zur Zielführungsunterstützung eines Fahrzeugführers bekannt, bei dem die aktuelle Ortposition ermittelt wird, eine Fahrtroute bestimmt wird und für diese Fahrtroute aktuelle Verkehrshinweise eingeholt und dem Fahrer angezeigt werden. Das Fahrtziel wird selbsttätig nach Wahrscheinlichkeitsgesichtspunkten anhand eines Vergleichs gespeicherter Fahrinformationen aus der Vergangenheit mit aktuellen Fahrinformationen abgeleitet. Dieses Verfahren liefert eine Unterstützung des Fahrers bei Routinefahrten, ohne dass von dem Fahrer ein Fahrtziel eingegeben werden muss. Das Verfahren unterstützt hierbei den Fahrer aber nur dann, wenn ein einziges Fahrtziel mit hinreichender Genauigkeit ermittelt werden kann. Es liefert jedoch keine Unterstützung, wenn die eindeutige Zuordnung eines einzigen wahrscheinlichen Fahrtziels nicht möglich ist.

Aufgabe der Erfindung ist es, ein Verfahren zur Auswahl und Aufbereitung von Verkehrsinformationen für einen Fahrer eines Kraftfahrzeuges derart weiterzuentwickeln, dass die Verkehrsinformationen zum einen hinsichtlich ihrer Relevanz für den Kraftfahrer gefiltert werden und der Fahrer beim Auftreten relevanter Verkehrsbehinderungen in der Umfahrung der Behinderung unterstützt wird, obwohl ein eindeutiges Fahrtziel nicht bestimmbar ist und eine Routenplanung nicht durchgeführt wurde.

Die Aufgabe wird erfindungsgemäß durch das in Anspruch 1 angegebene Verfahren gelöst.

Mit dem erfindungsgemäßen Verfahren werden zunächst die Fahrzeugposition und die Fahrtrichtung bestimmt. Die Bestimmung der Fahrzeugposition erfolgt insbesondere durch die Auswertung von Satellitennavigationssignalen, wobei der Längen- und der Breitengrad der aktuellen Fahrzeugposition bestimmt werden können. Die Festlegung der Fahrtrichtung kann durch Auswertung zweier hintereinander durchgeführter Positionsbestimmungen erfolgen. Anschließend wird die ermittelte Fahrzeugposition einer Straße anhand von Straßenkartendaten zugeordnet. Diese Straßenkartendaten können in unterschiedlicher Genauigkeit, beispielsweise im Fahrzeug, mitgeführt werden, beispielsweise auf einer CD-ROM oder auf einer DVD, oder die Straßenkartendaten können von einer externen Stelle in das Fahrzeug übertragen werden. Durch Vergleich der Fahrzeugposition mit den Straßenkartendaten kann das Fahrzeug einer bestimmten Straße zugeordnet werden. Die Straßen sind hierzu üblicherweise mit Nummern versehen, wobei Straßen unterschiedlicher Kategorie beispielsweise in Deutschland durch einen zusätzlichen Buchstaben unterscheidbar sind. Über ein Empfangsgerät für Verkehrsinformationen werden in üblicher Weise die Verkehrsmeldungen als Datenstrom empfangen. Bei dem Empfangsgerät handelt es sich üblicherweise um einen Rundfunkempfänger oder auch ein Mobilfunkgerät. Die Verkehrsmeldungen enthalten Informationen über eine Verkehrsbehinderung und einen von der Verkehrsbehinderung betroffenen Streckenabschnitt. Die Verkehrsmeldungen werden als Daten beispielsweise nach dem RDS-TMC-Standard empfangen und können von dem Empfangsgerät ausgewertet werden. Anschließend werden die empfangenen Verkehrsmeldungen mit möglichen Fahrtrouten des Fahrzeuges verglichen. Hierbei werden somit die für eine der möglichen Fahrtrouten des Fahrzeuges relevanten Verkehrsbehinderungen ermittelt.

Die Ermittlung der möglichen Fahrtrouten des Fahrzeuges kann auf unterschiedliche Weise erfolgen. In einer Ausführungsform wird nur eine einzige mögliche Fahrtroute angenommen, und zwar die aktuell von dem Fahrzeug befahrene Straße in die Fahrtrichtung, die als Fahrtrichtung des Kraftfahrzeuges ermittelt wurde. Dies ist beispielsweise bei längeren Autobahnfahrten eine sinnvolle Variante. Wurde zum Beispiel festgestellt, dass das Fahrzeug auf der mit der Bezeichnung "A7" versehenen Autobahn in südliche Richtung fährt, so werden nur die Verkehrsmeldungen als relevant ausgefiltert, die die von der aktuellen Fahrzeugposition in südlicher Richtung liegenden Streckenabschnitte der Autobahn "A7" betreffen.

In einer anderen Ausführungsvariante werden die möglichen Fahrtrouten anhand abgespeicherter Ziele oder Fahrtrouten früherer Fahrten ermittelt. Sind im Fahrzeug beispielsweise die letzten fünf angefahrenen Ziele hinterlegt, so kann ein Suchkorridor festgelegt werden, der sich von der aktuellen Fahrzeugposition zu diesen einzelnen Zielen erstreckt. Es werden dann nur all diejenigen Verkehrsmeldungen berücksichtigt, die diese Suchkorridore betreffen. Alternativ können auch alle z. B. hinsichtlich der Entfernung sinnvoll möglichen Strecken zwischen der aktuellen Fahrzeugposition und den früher angefahrenen Zielen hinsichtlich des Auftretens von Verkehrsbehinderungen beobachtet werden. Weiterhin können in dem Fahrzeug auch komplette Fahrtrouten früherer Fahrten abgespeichert sein, wie beispielsweise die Fahrtroute vom Wohnort zum Arbeitsplatz, so dass genau die Verkehrsmeldungen, die diese abgespeicherte frühere Fahrtroute betreffen, als relevant ausgewählt werden.

In einer anderen alternativen Ausgestaltung werden als mögliche Fahrtrouten diejenigen Straßen bestimmt, die in einem vorgegebenen Winkelsegment um die Fahrtrichtung des Fahrzeuges liegen. Hierzu werden keine weiteren Angaben über abgespeicherte Ziele oder früher benutzte Fahrtrouten benötigt, gleichwohl wird der Erfassungsbereich jedoch über die aktuell befahrene Straße hinaus erweitert. Über die Größe des vorgegebenen Winkelsegmentes kann der Reduktionsgrad der empfangenen Verkehrsmeldungen festgelegt werden.

In einer anderen Ausführungsform werden die möglichen Fahrtrouten anhand einer statistischen Straßenbeobachtung ermittelt. Diese Straßenbeobachtung kann sich beispielsweise darauf beziehen, wie oft der Fahrer einen bestimmten Streckenabschnitt befahren hat, wann der Streckenabschnitt zuletzt befahren wurde oder mit welcher Periodizität die Strecke befahren wurde. Anhand dieser Statistik kann ein Wahrscheinlichkeitsraum aufgespannt werden, so dass eine Reduzierung der Verkehrsinformationen anhand der ermittelten Wahrscheinlichkeiten erreicht werden kann. Somit kann beispielsweise festgelegt werden, dass alle Verkehrsinformationen als relevant angesehen werden, die auf Straßen liegen, die im Schnitt mindestens alle y Tage befahren werden und maximal x Kilometer entfernt sind. Alternativ können auch alle Verkehrsinformationen ausgewählt werden, die Straßenabschnitte betreffen, die nicht weiter von der aktuellen Fahrzeugposition als ein Vorgabewert entfernt sind. Durch die Erhebung dieser statistischen Daten können genau auf den Kunden zugeschnittene Kriterien festgelegt werden. Insbesondere können diese durch den Benutzer selbst parametrisiert werden.

Wurde eine relevante Verkehrsbehinderung auf einer der möglichen Fahrtrouten des Fahrzeuges detektiert, so wird nunmehr erfindungsgemäß ein Zwischenziel auf der von der relevanten Verkehrsbehinderung betroffenen möglichen Fahrtroute festgelegt, wobei das Zwischenziel auf der möglichen Fahrtroute in Fahrtrichtung des Fahrzeuges hinter dem von der Verkehrsbehinderung betroffenen Streckenabschnitt liegt. Das Zwischenziel ist also ein Punkt, an dem eine Umleitungsroute hinter der Verkehrsbehinderung wieder auf die ursprünglich als mögliche Fahrtroute angesehene Strecke zurückführt. Befährt das Fahrzeug beispielsweise die Autobahn "A7" zwischen den Anschlussstellen Nr. 34 und Nr. 35, wobei in Fahrtrichtung des Fahrzeuges vor dem Fahrzeug zwischen den Anschlussstellen Nr. 37 und Nr. 38 eine Fahrbahnsperrung gemeldet wurde, so wäre die Anschlussstelle Nr. 38 das erste mögliche Zwischenziel, an dem eine Umgehungsroute wieder auf die Autobahn "A7" zurückführen könnte. Darüber hinaus sind auch alle weiteren nachfolgenden Anschlussstellen, also die Anschlussstellen Nr. 39, Nr. 40, Nr. 41, ..., mögliche Zwischenziele. Von den möglichen Zwischenzielen kann automatisch eine ausgewählt werden. Alternativ kann jedoch auch eine Liste möglicher Zwischenziele erstellt werden, wobei ein gewünschtes Zwischenziel anhand der Liste möglicher Zwischenziele auswählbar ist. Während bei der ersten Variante ein Eingreifen des Fahrers zur Auswahl des Zwischenzieles nicht erforderlich ist, wird bei der zweiten Variante dem Fahrer eine Entscheidungsfreiheit hinsichtlich des Punktes, an dem er auf die ursprüngliche Route zurückkehren will, eingeräumt.

Nach Festlegung des Zwischenzieles wird nunmehr erstmals eine Routenberechnung gestartet. Bei dieser Routenberechnung wird eine Fahrtroute von der aktuellen Fahrzeugposition zu dem Zwischenziel berechnet, wobei der von der relevanten Verkehrsbehinderung betroffene Streckenabschnitt gemieden wird. Die berechnete Route ist somit eine Umgehungsroute bezüglich des berücksichtigten Verkehrshindernisses. Alternativ zu der Berechnung der Fahrtroute von der aktuellen Fahrzeugposition aus kann die Fahrtroute auch von einer in Fahrtrichtung des Fahrzeuges vor der aktuellen Fahrzeugposition liegenden Position aus zu dem Zwischenziel berechnet werden. Diese Variante ist beispielsweise von Vorteil, wenn das Fahrzeug noch relativ weit von der gemeldeten Verkehrsbehinderung entfernt ist und noch eine gewisse Zeit auf der aktuell befahrenen Straße weiterfahren kann. In diesem Fall kann die Umleitungsstrecke beispielsweise von einer Anschlussstelle aus berechnet werden, an der das Fahrzeug die aktuelle Autobahn verlassen muss, um die Umleitungsroute zu nutzen.

Da der Fahrer zwar in vielen Fällen die Hauptrouten kennt, auf denen er sich bewegt, jedoch mit möglichen Umleitungsrouten für bestimmte Streckenabschnitte weniger vertraut ist, wird schließlich noch eine Zielführungsausgabe gestartet, und es werden Zielführungsinformationen zu der berechneten Fahrtroute, das heißt der Umgehungsroute, ausgegeben. Die Ausgabe der Zielführungsinformationen kann insbesondere mit Erreichen des Zwischenzieles wieder beendet werden, da der Fahrer dann sich wieder auf der ursprünglich befahrenen Straße befindet.

Mit der Erfindung wird somit ein Verfahren zur Verfügung gestellt, das zum einen aus den eingehenden Verkehrsmeldungen die relevanten Verkehrsmeldungen herausfiltert, auch dann, wenn der Fahrer ein vorhandenes Navigationssystem nicht zur Zielführung nutzt. Im Gegensatz zu bekannten Navigationsverfahren werden die Routenplanung und die Ausgabe von Zielführungsinformationen erst dann gestartet, wenn während der Fahrt eine relevante Verkehrsmeldung eingeht. Ein Fahrer, der auf einer ihm an sich bekannten Strecke fährt und daher bewusst auf eine Zielführung durch ein Navigationssystem verzichtet, bekommt dann aber im Falle einer nötigen Umleitungsstrecke die erforderlichen Zielführungsinformationen zu der dann berechneten Umleitungsstrecke.

In einer Ausführungsform des Verfahrens werden die Verkehrsinformationen nach einem Entfernungskriterium gefiltert. Hierdurch können beispielsweise Verkehrsinformationen, die sich zwar auf die aktuell befahrene Strecke beziehen, jedoch einen noch weit entfernten Streckenabschnitt betreffen, unberücksichtigt bleiben, so dass die Anzahl der Verkehrsinformationen reduziert wird.

Die Straßenkartendaten können insbesondere aus einem im Fahrzeug mitgeführten Massenspeicher, beispielsweise einer CD-ROM oder einer DVD ausgelesen werden. Alternativ ist es auch möglich, die Straßenkartendaten von einer externen Stelle in das Fahrzeug zu übertragen, beispielsweise mittels einer Mobilfunkverbindung. In einer speziellen Ausgestaltung können die Straßenkartendaten auch mit den Verkehrsmeldungen übertragen werden. In diesem Fall werden zu einer Verkehrsmeldung Straßenkartendaten des die Verkehrsmeldung betreffenden Gebietes übertragen und können beispielsweise für die Berechnung der Umleitungsstrecke genutzt werden.

Die Erfindung wird nachfolgend anhand eines Ausführungsbeispiels und der Zeichnung näher erläutert. Es zeigen:
- Figur 1: ein Ablaufdiagramm des erfindungsgemäßen Verfahrens;
- Figur 2: einen Straßenkartenausschnitt zur Erläuterung des erfindungsgemäßen Verfahrens;
- Figur 3: die Sortierung bzw. Anzeige möglicher Zwischenziele und die zugehörigen Straßenabschnitte;
- Figur 4: die wesentlichen Komponenten eines Navigationssystems zur Durchführung des erfindungsgemäßen Verfahrens.

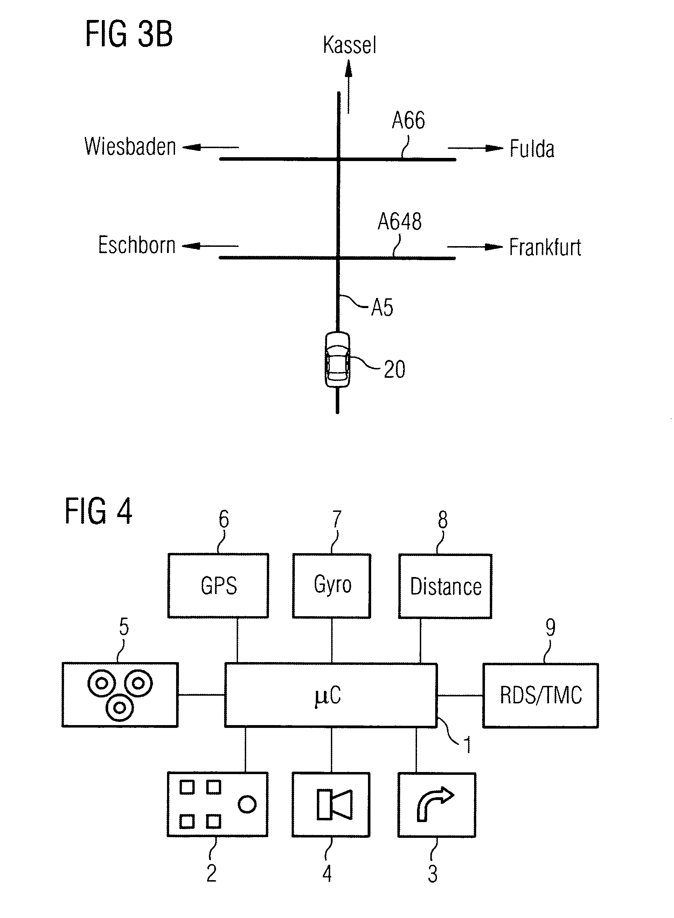

In Figur 4 sind die Komponenten eines zur Durchführung des erfindungsgemäßen Verfahrens geeigneten Navigationssystems für Kraftfahrzeuge schematisch dargestellt. Zentraler Bestandteil des Navigationssystems ist die Recheneinheit 1. Mit der Recheneinheit 1 ist eine Bedieneinheit 2 verbunden, über die Eingaben vorgenommen werden können. Mit der Recheneinheit 1 ist eine optische Ausgabeeinheit 3 verbunden, über die beispielsweise eine Auswahlliste zur Auswahl eines Zwischenzieles oder auch Zielführungsinformationen ausgegeben werden können. Die Zielführungsinformationen können weiterhin über einen Lautsprecher 4 akustisch ausgegeben werden. Die Eingabeeinheit 2 und die Ausgabeeinheit 3 können auch als kombinierte Ein/Ausgabeeinheit in Form eines Touch-Screens ausgebildet sein. Bei einer derartigen Ausgestaltung können beispielsweise Ziele oder Zwischenziele direkt durch Berühren des Bildschirmes ausgewählt werden.

Die Recheneinheit 1 ist ferner mit einer Datenbank 5 verbunden, die die Landkartendaten enthält. Im Ausführungsbeispiel sind die Landkartendaten auf einer DVD abgespeichert und werden von einem DVD-Lesegerät ausgelesen und an die Recheneinheit 1 übermittelt. Anhand der Landkartendaten kann von der Recheneinheit 1 bei bekanntem Start- und Zielort eine Routenberechnung durchgeführt werden.

Zur Bestimmung der aktuellen Fahrzeugposition enthält das Navigationssystem ferner einen Empfänger 6 zum Empfang von Satellitennavigationssignalen. Um eine von Satelliten unabhängige Positionsbestimmung durchführen zu können, enthält das Navigationssystem ferner einen Richtungssensor 7 und einen Wegsensor 8, die ebenfalls mit der Recheneinheit 1 verbunden sind, so dass mit Hilfe eines geeigneten Computerprogramms mit diesen Signalen eine Positionsbestimmung möglich ist. Ferner ist die Recheneinheit 1 mit einem Rundfunkempfänger 9 verbunden, der zum Empfang von RDS-TMC-Signalen ausgebildet ist. Somit können empfangene Verkehrsinformationen vom Rundfunkempfänger 9 an die Recheneinheit 1 weitergeleitet und wie bei bekannten Navigationssystemen zur Berücksichtung bei der Routenplanung herangezogen werden. Ein solches dynamisches Navigationssystem ist insoweit bekannt.

Bei den bekannten Navigationssystemen muss stets eine berechnete Route vorliegen, um Verkehrsinformationen berücksichtigen zu können. Die Erfindung stellt dagegen ein Verfahren zur Verfügung, mit dem die relevanten Verkehrsinformationen selektiert werden und eine Routenberechnung und die Ausgabe von Fahrhinweisen erst dann gestartet werden, wenn relevante Verkehrsinformationen vorliegen. Das erfindungsgemäße Verfahren ist dabei als Computerprogramm implementiert und läuft auf der Recheneinheit 1 ab.

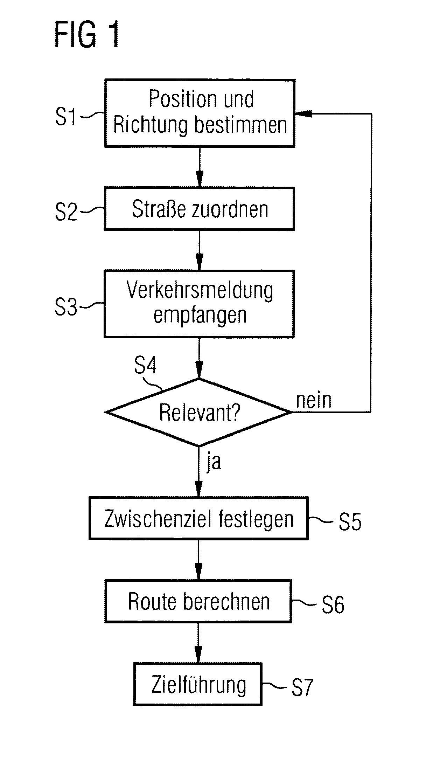

Anhand der Figur 1 wird das Verfahren nun in seinen wesentlichen Schritten beschrieben. Ausgangspunkt dabei ist die Situation, dass ein Fahrer mit seinem Fahrzeug unterwegs ist, das ein Navigationssystem, wie in Figur 4 beschrieben, aufweist. Der Fahrer hat, da er die zu fahrende Strecke kennt, keinen Zielort in das Navigationssystem eingegeben. Folglich wird von dem Navigationssystem zunächst auch keine Route berechnet, und es werden keine Zielführungshinweise an den Fahrer ausgegeben. Das Navigationssystem ist jedoch eingeschaltet. Das Navigationssystem ermittelt in Schritt S1 die Position des Fahrzeuges anhand der durch den Empfänger 6 empfangenen Satellitennavigationssignale. Aus zwei aufeinander folgenden Positionsbestimmungen wird darüber hinaus die Fahrtrichtung ermittelt. In Schritt S2 wird der Fahrzeugposition eine Straße zugeordnet. Hierzu werden die Positionsdaten mit den Landkartendaten, die auf der Datenbank 5 abgespeichert sind, verglichen. Auf diese Weise ist bekannt, auf welcher Straße sich das Fahrzeug befindet und in welche Richtung es fährt.

Über den Rundfunkempfänger 9 werden in Schritt S3 RDS-TMC-Daten empfangen, die Informationen zu Verkehrsbedingungen enthalten. Diese Informationen enthalten unter anderem Angaben zu der Wegstrecke, die von der Verkehrsbehinderung betroffen ist. Durch Vergleich dieser Daten mit der vom Fahrzeug befahrenen Straße und den Straßenkartendaten kann in Schritt S4 ermittelt werden, ob die Verkehrsmeldung für die aktuell befahrene Straße relevant ist. Ist dies nicht der Fall, so werden die Schritte S1 bis S4 in einer Schleife fortlaufend wiederholt.

Wird dagegen in Schritt S4 festgestellt, dass eine der Verkehrsmeldungen für die aktuell befahrene Straße relevant ist, so wird in Schritt S5 ein Zwischenziel festgelegt. Hierzu wird in einem automatisierten Verfahren unter Einbeziehung der durch die Verkehrsinformation übermittelte Lage und Länge des Verkehrsereignisses die nächstmögliche Auffahrt auf die aktuell befahrene Straße hinter dem Verkehrsereignis ermittelt. Dies geschieht, indem in der Datenbank der Staustrecke solange gefolgt wird, bis die Staustrecke verlassen wurde und eine neue Einfahrt gefunden wird. Bei Mehrdeutigkeiten, zum Beispiel an einem Autobahnkreuz, wird der Autobahn gefolgt, auf der das Verkehrsereignis liegt. In einer alternativen Verfahrensvariante können auch verschiedene Auffahrmöglichkeiten auf die befahrene Straße ermittelt und auf der Anzeigeeinheit 3 zur Auswahl bereitgestellt werden. Der Fahrer kann dann die gewünschte Auffahrt als Zwischenziel auswählen. Anstelle einer Liste der möglichen Auffahrten können die Auffahrten auch auf einer Kartendarstellung auf der Anzeigeeinheit 3 hervorgehoben werden. Im Falle eines Touch-Screens kann der Fahrer dann die gewünschte Auffahrt durch einfaches Antippen auswählen.

Nachdem ein Zwischenziel automatisch ausgewählt oder manuell festgelegt wurde, wird in Schritt S6 eine Route von der aktuellen Position zu diesem Zwischenziel, also eine Auffahrt auf die bisher befahrene Straße, berechnet. Die berechnete Route ist somit eine Umgehungsroute bezüglich des Verkehrshindernisses. In Schritt S7 werden anschließend Fahrhinweise an den Fahrer bezüglich dieser neu berechneten Route ausgegeben.

In einer abgewandelten Ausführungsform können auch zunächst mehrere Umleitungsrouten zu verschiedenen Zwischenzielen berechnet und auf der optischen Ausgabeeinheit 3 zur Auswahl angezeigt werden. In diesem Falle kann der Fahrer direkt eine der Umleitungsrouten wählen, ohne zuvor ein Zwischenziel angeben zu müssen.

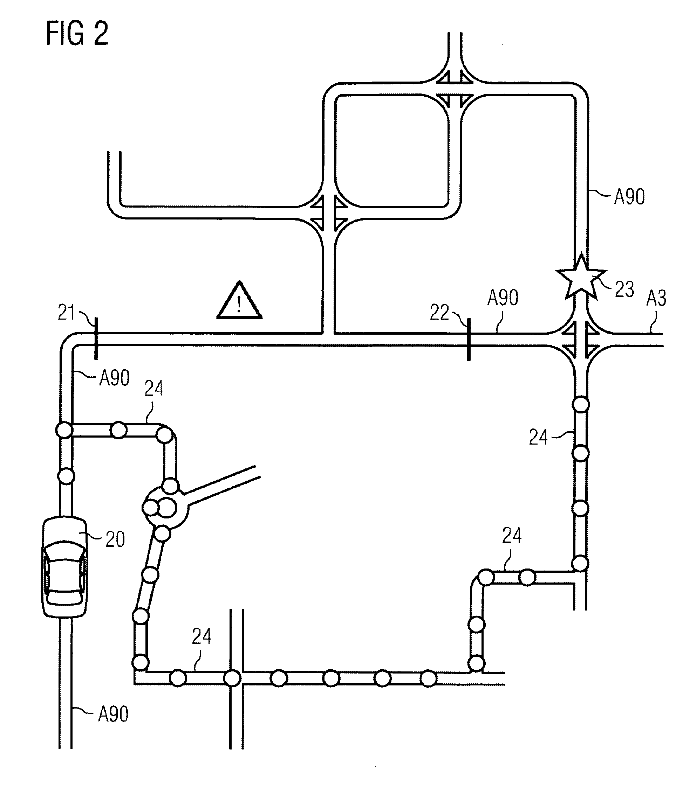

Figur 2 zeigt einen Ausschnitt aus einer Straßenkarte, der das erfindungsgemäße Verfahren weiter verdeutlicht. Ein Fahrzeug 20 fährt auf der mit "A90" bezeichneten Autobahn. Eine Routenplanung wurde nicht durchgeführt, und es werden keine Zielführungshinweise ausgegeben. Eine eingehende Verkehrsmeldung signalisiert einen Stau auf der befahrenen Autobahn "A90" zwischen dem Anfangspunkt 21 und dem Endpunkt 22. das Navigationssystem wählt daraufhin automatisch als Zwischenziel den Punkt 23, bei dem es sich um die erste Auffahrt auf die Autobahn "A90" hinter dem Stau handelt. Das Navigationssystem berechnet dann eine Umleitungsroute 24 von der aktuellen Position des Fahrzeuges 20 zu dem Zwischenziel 23. Anschließend werden dem Fahrer Fahrhinweise bezüglich der Umleitroute 24 ausgegeben. Die Fahrhinweise werden ausgegeben, bis das Fahrzeug das Zwischenziel 23 erreicht hat, bei dem sich der Fahrer wieder auf der ursprünglich befahrenen Autobahn "A90" befindet.

Bei dem Ausführungsbeispiel wurde die aktuell befahrene Straße als die einzig mögliche Route ausgewählt. Abweichend davon können selbstverständlich mehrere Routen als mögliche Routen ausgewählt werden, wie dies bereits zuvor beschrieben wurde.

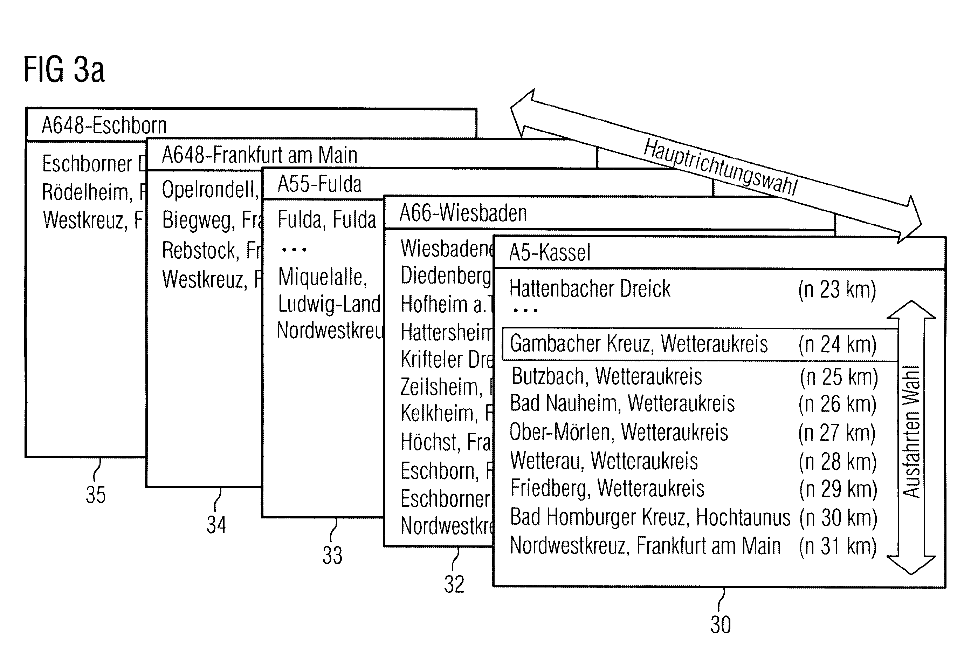

Neben der automatischen Auswahl des Zwischenzieles können dem Fahrer auch mehrere Zwischenziele zur Auswahl angeboten werden. Hierbei kann auch danach unterschieden werden, auf welcher Straße sich die einzelnen Zwischenziele befinden. Figur 3a zeigt hierzu eine Sortierung, bei der Zwischenziele, die zu verschiedenen Straßen gehören, auf einfache Weise gefunden und ausgewählt werden können. Das Fahrzeug 20 befindet sich hier auf der Autobahn "A5" in Fahrtrichtung 'Kassel' (Fig. 3b). In Fahrtrichtung befindet sich ein Stau, der umfahren werden soll. Hinter dem Stau befinden sich jedoch in kurzen Abständen zwei Autobahnkreuze, bei denen die Autobahn "A5" mit der Autobahn "A66" bzw. der Autobahn "A648" kreuzt. In einer ersten Liste 31 sind nun die verschiedenen Auffahrten auf die Autobahn "A5" in Fahrtrichtung 'Kassel' hinter der Staustrecke aufgelistet. In den Listen 32, 33 sind Auffahrten auf die Autobahn "A66" ausgehend von der Kreuzung mit der Autobahn "A5" aufgelistet, und zwar für die Fahrtrichtung 'Fulda' in Liste 33 und für die Fahrtrichtung 'Wiesbaden' in Liste 32. In den Listen 34, 35 sind die möglichen Auffahrten auf die Autobahn "A648" ausgehend von der Kreuzung mit der Autobahn "A5" aufgelistet, und zwar wiederum getrennt nach den beiden Fahrtrichtungen. Der Fahrer kann zunächst eine der Listen auswählen, je nachdem, ob seine Fahrt nach dem Stau weiterhin auf der "A5" in Richtung 'Kassel' oder auf der "A66" oder auf der "A648" erfolgen soll. Auf diese Weise wird sichergestellt, dass eine passende Auffahrt als Zwischenziel für die Routenberechnung genutzt wird, obwohl ein Fahrziel von dem Fahrer vorher in das Navigationssystem nicht eingegeben wurde.

## Patentansprüche

1. Verfahren zur Auswahl und Aufbereitung von Verkehrsinformationen für einen Fahrer eines Kraftfahrzeugs mit den Verfahrensschritten:
- Bestimmung einer Fahrzeugposition und einer Fahrtrichtung des Kraftfahrzeugs,
- Zuordnen der Fahrzeugposition zu einer Straße anhand von Straßenkartendaten,
- Bestimmung möglicher Fahrtrouten unter Einbeziehung der Fahrzeugposition, der Fahrtrichtung und der Straßenkartendaten,
- Empfangen mindestens einer Verkehrsmeldung, die Informationen über eine Verkehrsbehinderung und einen von der Verkehrsbehinderung betroffenen Streckenabschnitt enthält,
- Vergleichen der empfangenen Verkehrsmeldungen mit den möglichen Fahrtrouten zur Ermittlung von für eine der möglichen Fahrtrouten des Fahrzeugs relevanten Verkehrsbehinderungen,
und, falls eine relevante Verkehrsbehinderung auf einer der möglichen Fahrtrouten des Fahrzeugs ermittelt wurde:
- Festlegen eines Zwischenziels auf der von der relevanten Verkehrsbehinderung betroffenen möglichen Fahrtroute, wobei das Zwischenziel auf der möglichen Fahrtroute in Fahrtrichtung des Fahrzeugs hinter dem von der Verkehrsbehinderung betroffenen Streckenabschnitt liegt,
- Starten einer Routenberechnung zur Berechnung einer Fahrtroute von der aktuellen Fahrzeugposition oder einer in Fahrtrichtung des Fahrzeugs vor der aktuellen Fahrzeugposition liegenden Position zu dem Zwischenziel unter Vermeidung des von der relevanten Verkehrsbehinderung betroffenen Streckenabschnitts,
- Starten einer Zielführungsausgabe und Ausgabe von Zielführungsinformationen zu der berechneten Fahrtroute, wobei entweder
- als einzige mögliche Fahrtroute die aktuell von dem Fahrzeug befahrene Straße in die ermittelte Fahrtrichtung ausgewählt wird oder
- mehrere mögliche Fahrtrouten anhand abgespeicherter Ziele oder Fahrtrouten früherer Fahrten ermittelt werden oder
- in einem vorgegebenen Winkelsegment um die Fahrtrichtung des Fahrzeugs liegende Fahrtrouten als mögliche Fahrtrouten bestimmt werden.

2. Verfahren nach einem der vorhergehenden Ansprüche, **dadurch gekennzeichnet, dass** das Zwischenziel automatisch ermittelt wird.

3. Verfahren nach einem der Ansprüche 1 oder 2, **dadurch gekennzeichnet, dass** eine Liste möglicher Zwischenziele erstellt wird und ein gewünschtes Zwischenziel anhand der Liste möglicher Zwischenziele auswählbar ist.

4. Verfahren nach einem der vorhergehenden Ansprüche, **dadurch gekennzeichnet, dass** die Ausgabe der Zielführungsinformationen mit Erreichen des Zwischenziels beendet wird.

5. Verfahren nach einem der vorhergehenden Ansprüche, **dadurch gekennzeichnet, dass** die Verkehrsinformationen nach einem Entfernungskriterium gefiltert werden.

6. Verfahren nach einem der vorhergehenden Ansprüche, **dadurch gekennzeichnet, dass** die Straßenkartendaten aus einem im Fahrzeug mitgeführten Massenspeicher ausgelesen werden.

7. Verfahren nach einem der Ansprüche 1 bis 5, **dadurch gekennzeichnet, dass** die Straßenkartendaten von einer externen Stelle in das Fahrzeug übertragen werden.

8. Verfahren nach Anspruch 7, **dadurch gekennzeichnet, dass** die Straßenkartendaten mit den Verkehrsmeldungen übertragen werden.

9. Verfahren nach einem der vorhergehenden Ansprüche, **dadurch gekennzeichnet, dass** die Verkehrsmeldungen über ein Rundfunksystem oder ein Mobilfunksystem übertragen werden.

## Claims

1. Method for selecting and preparing traffic information for a driver of a motor vehicle having the method steps:
- determination of a vehicle position and a direction of travel of the motor vehicle,
- assignment of the vehicle position to a road by means of road map data,
- determination of possible routes including the vehicle position, the direction of travel and the road map data,
- reception of at least one traffic message which contains information about traffic disruption and about a section of route which is affected by the traffic disruption,
- comparison of the received traffic messages with the possible routes in order to identify traffic disruption which is relevant to the possible routes of the vehicle,
and if relevant traffic disruption has been identified on one of the possible routes of the vehicle:
- definition of an intermediate destination on the possible route which is affected by the relevant traffic disruption,
wherein the intermediate destination on the possible route in the direction of travel of the vehicle is after the section of the route which is affected by the traffic disruption,
- starting of a route calculation in order to calculate a route from the current position of the vehicle or a position which lies before the current position of the vehicle in the direction of travel of the vehicle to the intermediate destination while avoiding the section of the route which is affected by the relevant traffic disruption,
- starting of a navigation output means and outputting of navigation information relating to the calculated route,
wherein
- the road which is currently being travelled on by the vehicle in the identified direction of travel is selected as the single possible route or
- a plurality of possible routes are identified by means of stored destinations or routes of earlier journeys or
- routes lying in a predefined angular segment about the direction of travel of the vehicle are determined as possible routes.

2. Method according to one of the preceding claims, **characterized in that** the intermediate destination is identified automatically.

3. Method according to one of Claims 1 or 2, **characterized in that** a list of possible intermediate destinations is generated and a desired intermediate destination can be selected by means of the list of possible intermediate destinations.

4. Method according to one of the preceding claims, **characterized in that** the outputting of the navigation information is ended when the intermediate destination is reached.

5. Method according to one of the preceding claims, **characterized in that** the traffic information is filtered according to a distance criterion.

6. Method according to one of the preceding claims, **characterized in that** the road map data is read out from a mass storage device which is carried in the vehicle.

7. Method according to one of Claims 1 to 5, **characterized in that** the road map data is transmitted into the vehicle from an external location.

8. Method according to Claim 7, **characterized in that** the road map data is transmitted along with the traffic messages.

9. Method according to one of the preceding claims, **characterized in that** the traffic messages are transmitted via a radio system or a mobile radio system.

## Revendications

1. Procédé permettant de sélectionner et de traiter des informations relatives au trafic routier et destinées à un conducteur de véhicule automobile, comportant les phases suivantes:
- détermination d'une position et d'une direction de marche du véhicule automobile,
- affectation de la position du véhicule à une route à l'aide de données de cartes routières,
- détermination d'itinéraires possibles en faisant appel à la position du véhicule, à la direction de marche et aux données de cartes routières,
- réception d'au moins un message relatif au trafic routier renfermant des informations relatives à une perturbation du trafic routier et à une portion de trajet concerné par la perturbation du trafic routier,
- comparaison des messages reçus relatifs au trafic routier avec les itinéraires possibles en vue de déterminer les perturbations du trafic routier pertinentes pour l'un des itinéraires possibles du véhicule,
et, dans le cas où une perturbation pertinente du trafic routier a été détectée sur l'un des itinéraires possibles du véhicule:
- définition d'une destination intermédiaire sur l'itinéraire possible concerné par la perturbation pertinente du trafic routier, la destination intermédiaire sur l'itinéraire possible se trouvant, dans la direction de marche du véhicule, derrière la portion de trajet concernée par la perturbation du trafic routier,
- lancement d'un calcul d'itinéraire pour calculer un itinéraire entre la position actuelle du véhicule ou une position se trouvant, dans la direction de marche du véhicule, devant la position actuelle du véhicule et la destination intermédiaire en évitant la portion de trajet concernée par la perturbation pertinente du trafic routier,
- démarrage d'une édition de pilotage vers la destination et édition d'informations de pilotage vers la destination relative à l'itinéraire calculé, alors que, ou bien,
- en tant que seul itinéraire possible dans la direction de marche détectée, la route actuellement parcourue par le véhicule est sélectionnée, ou bien,
- plusieurs itinéraires possibles sont définis à l'aide de destinations ou d'itinéraires de voyages précédents qui ont été mémorisés, ou bien,
- des itinéraires se trouvant dans un segment angulaire donné autour de la direction de marche du véhicule sont déterminés comme itinéraires possibles.

2. Procédé selon l'une des revendications précédentes, **caractérisé par le fait que** la destination intermédiaire est définie automatiquement.

3. Procédé selon l'une des revendications 1 ou 2, **caractérisé par le fait qu'**une liste de destinations intermédiaires possibles est établie et qu'une destination intermédiaire souhaitée peut être sélectionnée à l'aide de la liste de destinations intermédiaires possibles.

4. Procédé selon l'une des revendications précédentes, **caractérisé par le fait que** l'édition des informations relatives au pilotage vers la destination se termine lorsque la destination intermédiaire est atteinte.

5. Procédé selon l'une des revendications précédentes, **caractérisé par le fait que** les informations relatives au trafic routier sont filtrées en fonction d'un critère de distance.

6. Procédé selon l'une des revendications précédentes, **caractérisé par le fait que** les données de cartes routières sont lues sur une mémoire de masse embarquée dans le véhicule.

7. Procédé selon l'une des revendications 1 à 5, **caractérisé par le fait que** les données de cartes routières sont transmises dans le véhicule à partir d'une station extérieure.

8. Procédé selon la revendication 7, **caractérisé par le fait que** les données de cartes routières sont transmises avec les messages relatifs au trafic routier.

9. Procédé selon l'une des revendications précédentes, **caractérisé par le fait que** les messages relatifs au trafic routier sont transmis par l'intermédiaire d'un système de radiodiffusion ou d'un système de radio mobile.
